# EUROPEAN PATENT APPLICATION

(11) **EP 4 740 722 A1**
(43) Date of publication of application: **13.05.2026**
(21) Application number: 25213716.1
(22) Date of filing: 05.11.2025
(51) Int. Cl.: A01D 34/73

(54) **WORKING IMPLEMENT QUICK RELEASE SYSTEM, METHOD, AND ASSOCIATED POWER TOOLS**

(30) Priority: 07.11.2024 US 202463717403 P
(71) Applicant: Techtronic Cordless GP, Anderson, SC 29621 (US)
(72) Inventor: HOLMAN, Christopher A., Anderson, 29621 (US)
(74) Representative: Zimmermann & Partner Patentanwälte mbB

(57) **Abstract**

A lawnmower (100) including a motor (118); a blade (114) having a sharpened edge (116); and a quick release system (126) configured to releasably couple the blade (114) to the motor (118), the quick release system (126) including: a user-actuatable interface (128) movable between an engaged position and a release position; a blade engagement element (132); and a linkage (130) coupled to the user-actuatable interface (128) and configured to drive the blade engagement element (132) between an engaged state and a release state in response to movement of the user-actuatable interface (128) between the engaged and release positions.

## Description

### CROSS-REFERENCE TO RELATED APPLICATIONS

The present application claims priority to U.S. Provisional Patent Application Serial No. 63/717,403, filed on November 7, 2024, the disclosure of which is incorporated by reference herein in its entirety.

### FIELD

The present disclosure relates generally to lawn mowers, and more particularly to quick release architecture for quickly engaging and releasing one or more lawn mower blades.

### BACKGROUND

Lawn mowers typically utilize rotating cutting implements, such as rotating blades, with sharpened edges that, when rotated at sufficient speeds, cut lawn and other underlying debris. Lawn mowers are designed to operate over a wide range of use cases and come in a wide variety of styles (e.g., push mower, walk-behind mower, riding mower, standing mower, etc.).

The operator may adjust the lawnmower to accommodate different working conditions. For example, in some instances the operator may want to discharge cut clippings onto the ground surface. In other instances, the operator may want to mulch the clippings to create a finer deposition of cut clippings. In yet other instances, the operator may want to use a bagging system to extract the cut clippings from the ground surface. Each of these operations may benefit from a different cutting implement, and more particularly, from a different type of cutting implement. For example, some grass cutting blades perform better without a bagging system. Meanwhile mulching blades are altogether different from other types of cutting implements. Thus, every time the operator wishes to change their mowing technique (i.e., bagging, mulching, side discharge, etc.), the operator must remove the existing cutting implement and install the correct cutting implement. In the case of walk-behind and push lawnmowers, this typically involves propping the lawnmower on its side, removing a nut from a threaded motor output shaft, removing a washer and/or other capture component(s), translating the cutting implement along a length of the shaft, and then repeating these steps in reverse to install the new cutting implement. During installation of the new cutting implement, it is not uncommon for the operator to hold the first-installed components in place on the shaft until the nut is present. This requires the operator to use one hand to hold the components on the shaft while searching for the nut and then utilizing their other hand to secure the nut. Moreover, tightening the nut requires application of torque, typically through a wrench, which can be dangerous if the operator slips and impacts against the sharpened edge of the cutting implement.

In addition to changing out cutting implements in view of different mowing operations, it is not uncommon for operators to remove cutting implements for maintenance and upkeep. For instance, mower blades may require sharpening after several uses. While some operators may perform sharpening with the mower blade still attached to the shaft, it is suggested to remove the mower blade from the shaft prior to sharpening.

Accordingly, improved quick release architecture for attaching and detaching a lawn mower cutting implement is desired in the art. In particular, a quick release which provides easy installation and removal of the cutting implement while maintaining strong positive engagement with the cutting implement during use of the lawn mower would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a lawnmower is provided. The lawnmower includes a motor; a blade having a sharpened edge; and a quick release system configured to releasably couple the blade to the motor, the quick release system comprising: a user-actuatable interface movable between an engaged position and a released position; a blade engagement element; and a linkage coupled to the user-actuatable interface and configured to drive the blade engagement element between an engaged state and a release state in response to movement of the user-actuatable interface between the engaged and release positions.

In accordance with another embodiment, a method of removing a blade from a lawnmower is provided. The method includes removing a battery or user-selectable component from a path of a user-actuatable interface to permit a full range of movement of the user-actuatable interface; and after permitting the full range of movement, moving the user-actuatable interface from an engaged position to a release position, wherein moving the user-actuatable interface causes a lifter to move a blade engagement element from an engaged state to a release state, and wherein the blade is removable with the blade engagement element in the release state.

In accordance with another embodiment, a lawnmower is provided. The lawnmower includes a throttle; a motor; a battery removably disposed in a battery compartment and electrically coupled to the motor to energize the motor in response to user input received at the throttle; a blade with a sharpened edge; and a quick release system releasably coupling the blade to the motor, the quick release system comprising: a user-actuatable interface movable along a path between an engaged position and a release position, wherein the path is blocked by the battery when the battery is disposed in the battery compartment or blocked by a user-selectable component when the user-selectable component is coupled with the lawnmower; a blade engagement element; and a linkage coupled to the user-actuatable interface and configured to drive the blade engagement element between an engaged state and a release state in response to movement of the user-actuatable interface between the engaged and release positions.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a front perspective view of a walk-behind lawnmower in accordance with embodiments of the present disclosure;
FIG. 2 is a front perspective view of a walk-behind lawnmower in accordance with embodiments of the present disclosure;
FIG. 3 is a side view of a cutting system of the lawnmower in accordance with embodiments of the present disclosure;
FIG. 4 is a rear view of the cutting system in accordance with embodiments of the present disclosure;
FIG. 5 is a top perspective view of a portion of the cutting system including a user-actuatable interface in accordance with embodiments of the present disclosure;
FIG. 6 is a bottom perspective view of a portion of the cutting system including the user-actuatable interface in accordance with embodiments of the present disclosure;
FIG. 7 is a perspective view of the cutting system with the user-actuatable interface in the engaged state whereby a cutting blade of the cutting system is retained by the cutting system in accordance with embodiments of the present disclosure;
FIG. 8 is a perspective view of the cutting system with the user-actuatable interface in the released state whereby a cutting blade of the cutting system is releasable or engageable with the cutting system in accordance with embodiments of the present disclosure;
FIG. 9 is a view of the user-actuatable interface in connection with a blade engagement element via a linkage in accordance with embodiments of the present disclosure;
FIG. 10 is a view of the user-actuatable interface in connection with the blade engagement element via the linkage in accordance with embodiments of the present disclosure;
FIG. 11 is a side perspective view of a portion of the cutting system in accordance with embodiments of the present disclosure;
FIG. 12 is bottom perspective view of a portion of the cutting system in accordance with embodiments of the present disclosure;
FIG. 13 is a perspective view of the blade engagement elements in accordance with embodiments of the present disclosure;
FIG. 14 is a cross-sectional side view of the cutting system in accordance with embodiments of the present disclosure;
FIG. 15 is a top view of the cutting system with a battery removed in accordance with embodiments of the present disclosure;
FIG. 16 is a bottom view of the cutting system with the battery removed in accordance with embodiments of the present disclosure;
FIG. 17 is an exploded view of the cutting system in accordance with embodiments of the present disclosure;
FIG. 18 is an exploded view of the cutting system in accordance with embodiments of the present disclosure;
FIG. 19 is a side view of a portion of the cutting system in accordance with embodiments of the present disclosure;
FIG. 20 is an exploded view of a cutting system in accordance with embodiments of the present disclosure;
FIG. 21 is an exploded view of a portion of the cutting system of FIG. 20 in accordance with embodiments of the present disclosure;
FIG. 22 is a side cross-sectional view of the cutting system of FIG. 20 in accordance with embodiments of the present disclosure;
FIG. 23 is a top perspective view of a portion of the cutting system of FIG. 20 in accordance with embodiments of the present disclosure;
FIG. 24 is a side perspective view of a portion of the cutting system of FIG. 20 in accordance with embodiments of the present disclosure;
FIG. 25 is a top perspective view of a portion of the cutting system of FIG. 20 in accordance with embodiments of the present disclosure; and
FIG. 26 is a side view of a portion of the cutting system of FIG. 20 in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, embodiments described herein are directed to a quick release mechanism and system for attaching and detaching a working implement, such as a cutting implement (and more particularly, a cutting blade) relative to a power tool, such as a lawnmower.

Traditionally, lawnmowers use threaded nuts to retain cutting blades on a threaded drive shaft connected to a motive device, such as a gas-powered engine. The cutting blade is inserted onto the drive shaft and sandwiched between a stop surface of the shaft (or another component) and the nut. The nut is tightened to restrict movement of the cutting blade relative to the drive shaft. While the nut provides a strong attachment interface for retaining the cutting blade on the motor shaft, it is often difficult to undo the nut. Frequently, removing the cutting blade from the motor shaft requires the use of tooling, such as wrenches. Not all lawnmower operators have the required tooling to complete such operation. Additionally, the application of high torque to unlock and lock the nut poses dangers to the operator as the wrench may slip under load, causing the operator to impact the cutting blade.

The quick release systems and methods described herein allow a user to rapidly engage and disengage a working implement, such as a cutting blade, without the use of tools and without requiring expenditure of significant energy.

The quick release system generally includes a user-actuatable interface disposed at a readily accessible location for user interaction, a blade engagement element which engages with the cutting blade to selectively retain the cutting blade at an appropriate location, and a linkage connecting the user-actuatable interface with the blade engagement element. The user-actuatable interface may be in the form of a paddle, a knob, a switch, a latch, a handle, a dial, a cam, etc. The user-actuatable interface may be disposed at an upper side of the lawnmower such that the user-actuatable interface may be accessed without having to invert or raise the lawnmower. In an embodiment, the user-actuatable interface is disposed in a compartment that also stores one or more batteries (or an engine) of the lawnmower. The compartment can include a cover that moves between open and closed positions. With the cover in the open position, the operator can access the batteries and the user-actuatable interface. With the cover in the closed position, the batteries and user-actuatable interface can be protected against damage and environmental debris exposure.

The user-actuatable interface moves, e.g., rotates, between an engaged position and a release position. In an embodiment, the user-actuatable interface rotates about a generally horizontal axis when the lawnmower is resting on the wheels on a horizontal surface. In other embodiments, the user-actuatable interface can rotate about a different axis, such as a vertical or angularly offset axis. Yet further, in some instances, the user-actuatable interface can move via a different motion profile, such as a roto-translational movement, a translational movement, or the like.

With the user-actuatable interface in the engaged position, the cutting blade is retained (i.e., locked) by the blade engagement element. The cutting blade may be used to perform a cutting operation when the user-actuatable interface is in the engaged position. Conversely, with the user-actuatable interface in the released position, the cutting blade may be free to move relative to the blade engagement element, allowing the operator to remove the cutting blade for maintenance (e.g., sharpening) or to swap out the cutting blade with a different type of cutting blade or cutting implement. In some situations, the released position may not correspond to a released state of the blade engagement element.

In some instances, actuation of the user-actuatable interface from the engaged position to the release position can be prevented by the batteries. That is, presence of the batteries can interfere with the ability of the operator to move the user-actuatable interface from the engaged position to the release position. The operator may still be able to access the user-actuatable interface with the batteries present, but is restricted from moving the user-actuatable interface a sufficient distance to allow the blade engagement elements to move to the fully released state. In some implementations, the blade engagement elements may remain in the fully engaged state during any nominal movement of the user-actuatable interface prior to contacting the batteries. That is, with the batteries present and connected, the user-actuatable interface is not capable of unlocking the cutting blades, thereby mitigating a potential dangerous environment for the operator should the lawnmower turn on with the operator's hands near the cutting blade.

One way to restrict movement of the user-actuatable interface via the batteries is to position the batteries in the direction of movement taken by the user-actuatable interface when travelling to the release position. In this regard, the user-actuatable interface impacts against the batteries prior to reaching the release position. Another way to restrict movement of the user-actuatable interface is to position the batteries in the path of movement of the linkage (or a portion thereof). In this regard, the user-actuatable interface is incapable of moving the linkage past a threshold point which corresponds to the engaged state.

In an embodiment, the user-actuatable interface may be further interlocked against unwanted actuation by use of a user-selectable component. For example, the user-selectable component can extend through, around, or near the user-actuatable interface when present, preventing the user-actuatable interface from moving to the release position. Only after removing the user-selectable component from the path of the user-actuatable interface is the user-actuatable interface capable of moving to the release position. In an embodiment, the user-selectable component can include a key for the lawnmower. When the key is present and coupled to the lawnmower such that the cutting implement is operable to be driven by the blade motor, the key restricts movement of the user-actuatable interface and prevents unwanted unlocking of the cutting blade. To remove the cutting blade, the operator must remove the key, thereby disabling the ability of the blade motor to drive the cutting blade to move. The key can be received in a key slot of the lawnmower. The key slot can include a circuit that is broken when the key is removed. When broken, the circuit prevents the lawnmower from operating. When the key is present, the circuit is completed.

Interlocking the user-actuatable interface with one or both of the batteries and the user-selectable component prevents the lawnmower from accidently driving the cutting blade when the operator is attaching or detaching the cutting blade. Only once power has been fully disconnected, e.g., by removing the batteries and/or removing the key, can the cutting blade be removed. The lawnmower is thus safe to use during quick change of the cutting blades.

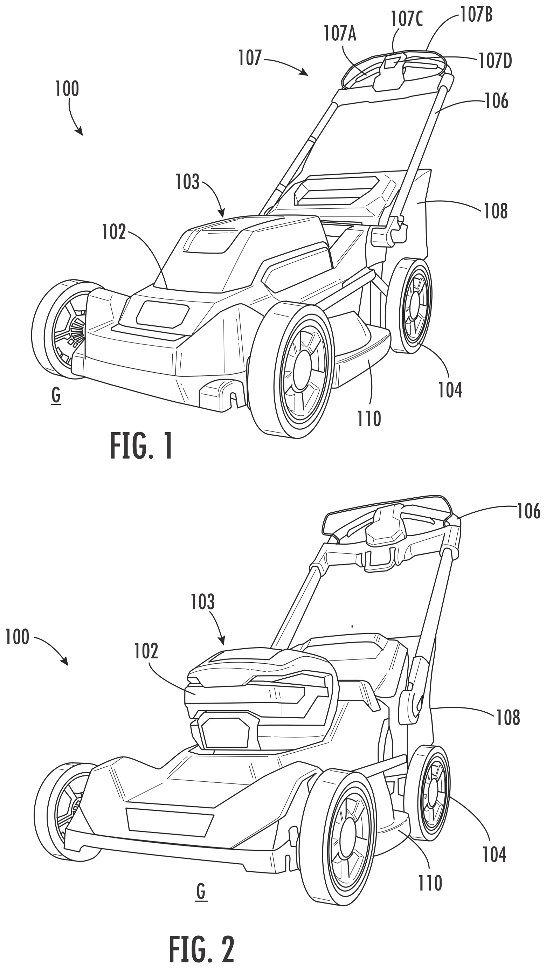

Referring now to the drawings, FIGS. 1 and 2 illustrate example walking lawnmowers 100. The lawnmowers 100 may be manually pushed by the operator and/or include a powered feature that propels the lawnmower 100 over the ground surface G. The ground surface G can include an outdoor work environment, such as a lawn having grass or another type of vegetation. The lawnmowers 100 can weigh at least 10 kilograms (kg), such as at least 12 kg, such as at least 14 kg, such as at least 15 kg, such as at least 20 kg. The lawnmowers 100 each include a body 102. The body 102 can include a structural component, such as a frame, and an outer housing.

The body 102 can be supported by one or more wheels 104 that roll along the ground surface G. The wheel(s) 104 can include two sets of wheels, a forward set of wheels 104 and a rear set of wheels 104. In an embodiment, the rear wheels 104 are driven and the front wheels 104 are passive (i.e., non-driven). In another embodiment, the front wheels 104 are driven and the rear wheels 104 are passive. In yet another embodiment, all of the front and rear wheels 104 are driven. The wheels 104 can ride along the ground surface G and separate the body 102 from the ground surface during use of the lawnmower 100. The wheels 104 can be linked to the body 102 through one or more adjustable interfaces that, alone or collectively, permit height adjustment of the body 102 relative to the ground surface G.

The lawnmowers 100 further include a handle 106 extending rearward from the body 102. The handle 106 can be pivotable at an interface with the body 102. For example, the handle 106 can pivot about a horizontal axis between a forward (stored) position and a rear (in use) position.

A bagging system 108 is disposed below the handle 106 and extends rearward from the body 102. The bagging system 108 may be supported by the body 102, the handle 106, or a combination thereof. The bagging system may be passive, i.e, without active suction to achieve biased airflow. Instead, clippings may be fed to the bagging system 108 via airflow generated by rotation of a cutting implement supported within the body 102.

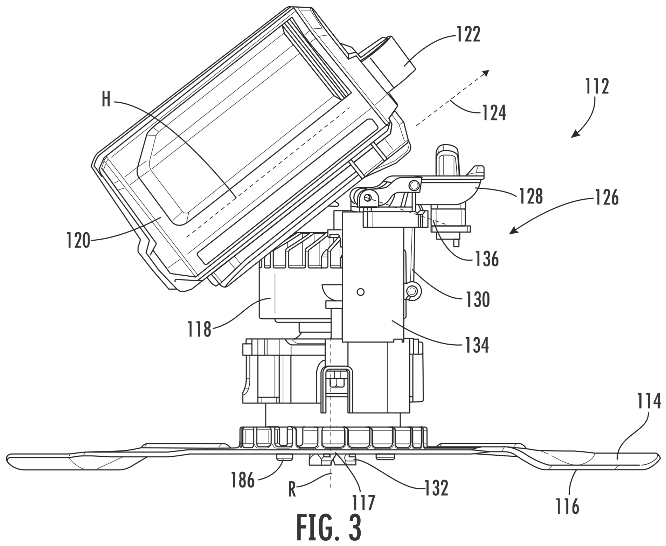

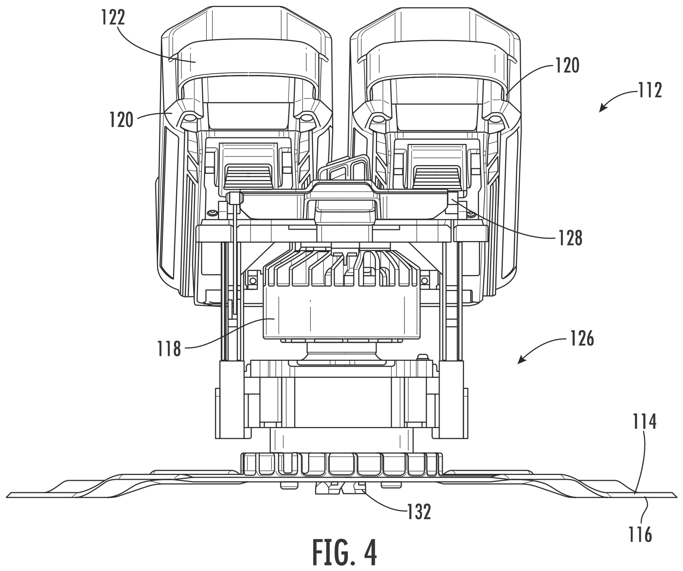

A cutting deck 110 is defined by the body 102 and surrounds a cutting volume in which the cutting implement, e.g., a lawn mower blade 114 (FIGS. 3 and 4), is rotatably driven. The cutting implement is rotatably driven by a motive device, such as a motor 118 (FIGS. 3 and 4). The motor 118 is housed at least partially within the body 102 and receives power from one or more energy storage devices, such as one or more batteries. The batteries are stored at least partially within the body 102 and protected from exposure to environmental debris, weather conditions, and the like.

The lawnmowers 100 depicted in FIGS. 1 and 2 are often referred to as walk-behind lawnmowers as the operator walks behind the lawnmower 100 and controls travel direction of the lawnmower 100 via input to the handle 106. The handle 106 can include user control implements 107, such as a throttle 107A, a bail 107B, a walking speed selector 107C, a blade speed selector 107D, or any combination thereof. The lawnmower 100 further includes control circuitry (not illustrated), including, e.g., a processor and a memory storing instructions executable by the processor to control one or more features described herein. The control circuitry can include a wired interface between one or more of the user control implements 107, the motor 118, a walking motor for driving the wheel(s)s 104, the processor, or any combination thereof.

In addition to walk-behind lawnmowers, the systems and methods described herein may also be integrated into other types of lawnmowers, such as riding lawnmowers, zero-turn radius (ZTR) lawnmowers, tractor lawnmowers, or the like.

FIGS. 3 and 4 illustrate different side views of a cutting system 112. FIG. 3 is from a first side and FIG. 4 is from a second side orthogonally oriented relative to FIG. 3. The cutting system 112 is supported by the body 102. A first portion of the cutting system 112 can be disposed within the cutting deck 110 and a second portion of the cutting system 112 can be disposed outside of the cutting deck 110, e.g., above the cutting deck 110. The second portion of the cutting system 112 may be disposed within an internal cavity of the body 102 such that the second portion is not accessible. Alternatively, or in addition, the second portion of the cutting system 112 can be disposed within an accessible compartment defined by the body 102.

The cutting system 112 includes the blade 114. The blade 114 is a generally rigid planar body including a sharpened edge 116. The blade 114 is rotatably driven by the motor 118 to cut grass and other debris located below the lawnmower 100. The blade 114 may be selectable from a plurality of different blade types. Exemplary blade types include standard blades, high-lift blades, low-fit blades, mulching blades, bagging blades, hybrid blades, and the like.

The blade 114 can have a mass of at least 0.5 kg, such as at least 0.75 kg, such as at least 1 kg, such as at least 1.25 kg, such as at least 1.5 kg. The blade 114 can have a maximum length of at least 0.35 meters (m), such as at least 0.4 m, such as at least 0.5 m, such as at least 0.6 m, such as at least 0.7 m, such as at least 0.8 m, such as at least 0.9 m, such as at least 1 m. The blade 114 can define a moment of inertia of at least 0.005 kg·m², such as at least 0.01 kg·m², such as at least 0.05 kg·m², such as at least 0.1 kg·m². During use, the blade 114 can be driven at a speed of at least 100 revolutions per minute (RPM), such as at least 500 RPM, such as at least 1000 RPM to achieve desired cutting of the underlying grass and/or debris. During use, the blade 114 can be driven at a speed less than 4000 RPM, such as less than 3500 RPM, such as less than 3000 RPM, such as less than 2500 RPM, such as less than 2000 RPM, such as less than 1500 RPM. Operating lawnmower blades at speeds in excess 4000 RPM creates airflow issues resulting in issues with bagging, creates dangers to users, and sometimes creates cut quality issues.

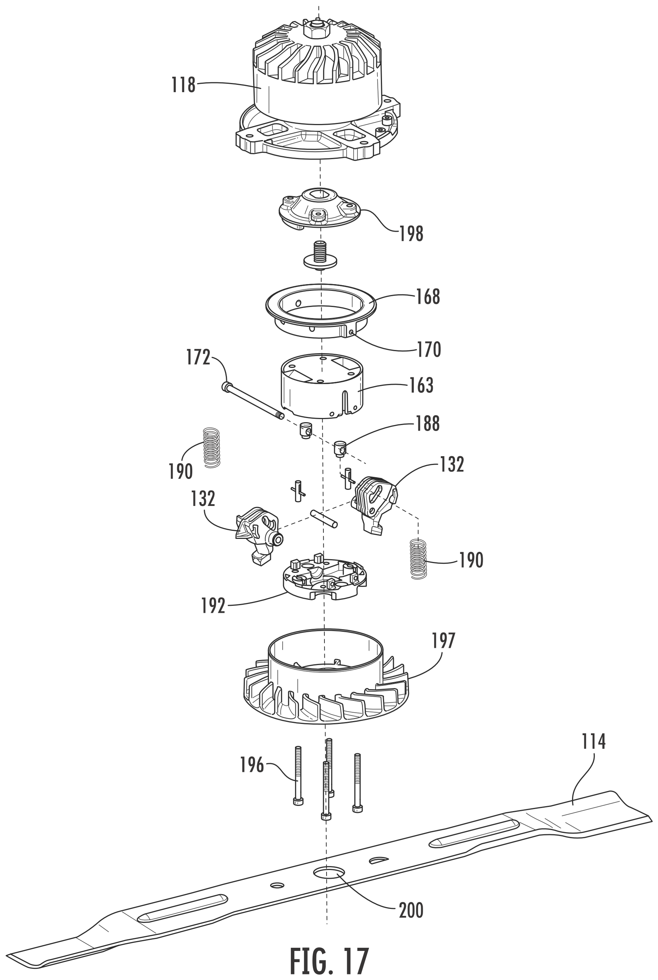

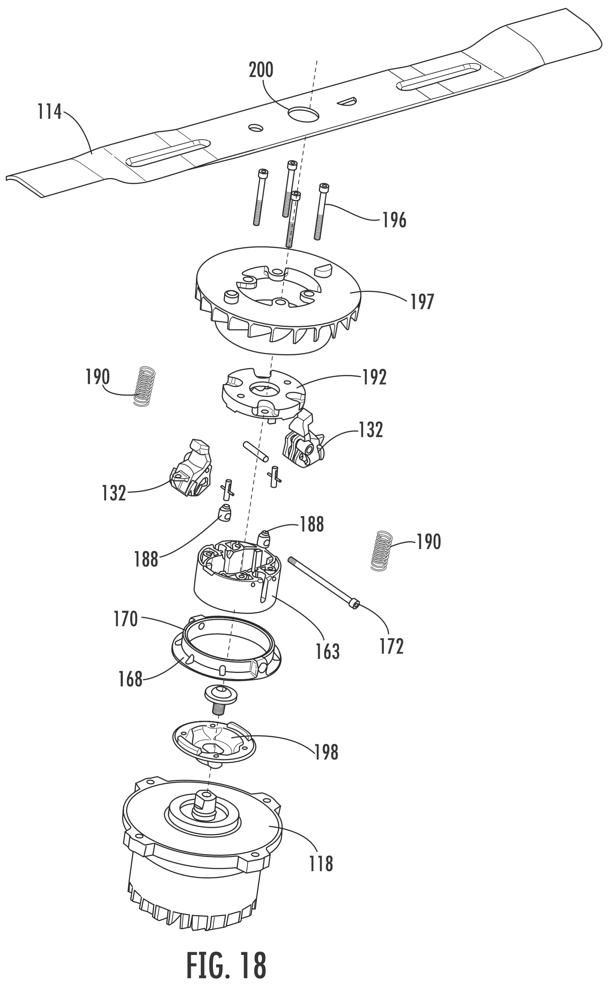

Referring to FIGS. 17 and 18, the blade 114 defines a central aperture 200. The central aperture 200 can be circular and devoid of keying (anti-rotation) features. One or more keying features 202 may be radially spaced apart from the central aperture 200. The keying feature(s) 202 may interface with complementary features associated with another portion of the cutting system 112, e.g., a motor output, to prevent the blade 114 from slipping when motor torque is applied.

Some blade types utilize multiple blades that are separately mounted to the motor 118. The separate blades may be clocked (rotationally offset) from one another and create complementary airflow characteristics to enhance grass cutting. The blades 114 are separated (spaced apart) from the underlying ground surface G during cutting operations.

Referring again to FIGS. 3 and 4, the motor 118 can include a brushless direct current (DC) motor with an output shaft defining a rotational axis R. The motor 118 is electrically coupled to a power source, such as one or more batteries 120, such as two batteries 120, 120. The one or more batteries 120 may be disposed at a vertical elevation above the blade 114 when the lawnmower 100 is in use. The one or more batteries 120 can include rechargeable DC battery packs configured to deliver a nominal output voltage sufficient to drive the motor 118 to drive the blade 114. The one or more batteries 120 can be in the form of removable battery packs releasably coupled to electrical contacts of the lawnmower 100 by a spring-biased latch. The one or more batteries 120 may be electrically coupled to the motor 118 in parallel or in series.

The batteries 120 may be receivable in one or more compartments 103 defined by the body 102 (FIGS. 1 and 2). For example, the body 102 can include a compartment 103 having a cover which is movable between an open position and a closed position. With the cover in the open position, the batteries 120 can be accessed from the compartment 103. With the cover in the closed position, the batteries 120 can be protected (e.g., sealed) from environmental exposure.

The batteries 120 can be aligned in one or more rows, staggered rows, on opposite sides of the motor 118, or the like. The batteries 120 can be coupled to the lawnmower 100 in a canted orientation relative to the rotational axis R of the motor 118. For example, the batteries 120 can define a height H that is angularly offset from the rotational axis R of the motor 118 by at least 5°, such as at least 10°, such as at least 15°, such as at least 20°, such as at least 25°, such as at least 30°, such as at least 35°, such as at least 40°, such as at least 45°. In this regard, the batteries 120 may be low profile, reducing the perceived size of the lawnmower 100. The batteries 120 may be removable from the lawnmower 100 in a canted direction 124. The operator can pull on the batteries 120 using separate handles 122. Each handle 122 is located at an accessible area for operator grasp when the cover of the compartment 103 is open to permit easy removal and insertion of the batteries 120 relative to the compartment 103. In the depicted embodiment, the batteries 120, 120 are oriented at a same relative angle, stacked next to one another. In other instances, the batteries 120, 120 may be differently arranged.

The cutting system 112 further includes a quick release system 126. The quick release system 126 permits an operator to quickly couple and decouple the blade 114 relative to the motor 118. The quick release system 126 can include a user-actuatable interface 128, a linkage 130, and one or more blade engagement elements 132 operably coupled to the user-actuatable interface 128 through the linkage 130.

The user-actuatable interface 128 can include a paddle, a knob, a switch, a latch, a handle, a dial, a cam, another user-actuatable interface, or any combination thereof. The user-actuatable interface 128 permits the operator to actuate the quick release system 126 between an engaged state, in which the blade 114 is coupled to the motor 118, and a release state, in which the blade 114 is uncoupled from the motor 118. In the illustrated embodiment, the user-actuatable interface 128 is rotatably coupled to a support structure 134 about a pivot axis 136. The support structure 134 can remain relatively fixed in location with respect to the lawnmower 100 while the quick release system 126 moves between the engaged and released states. For example, the support structure 134 can be integral with the body 102 or coupled therewith through a frame.

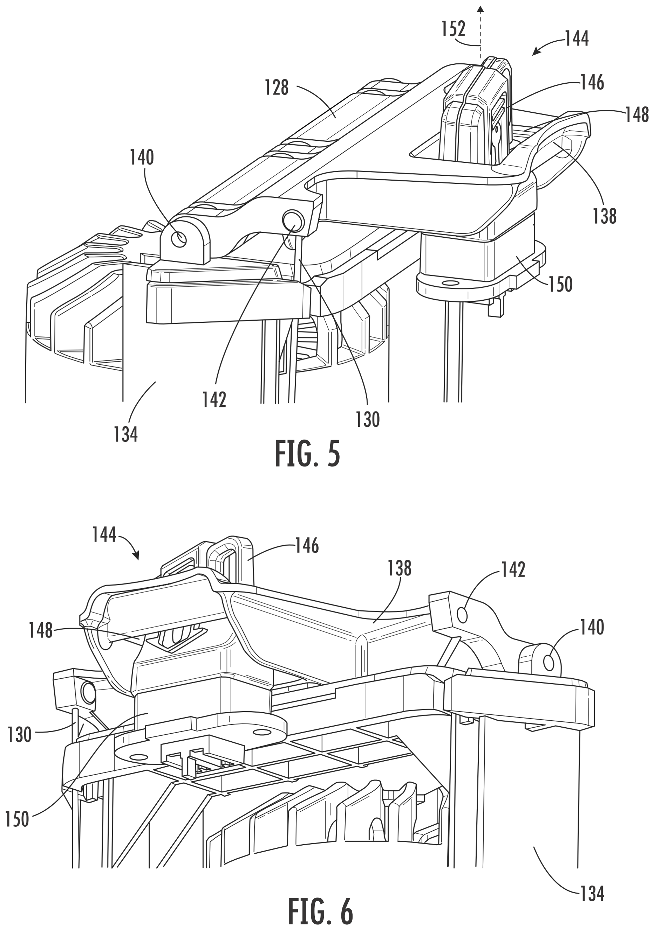

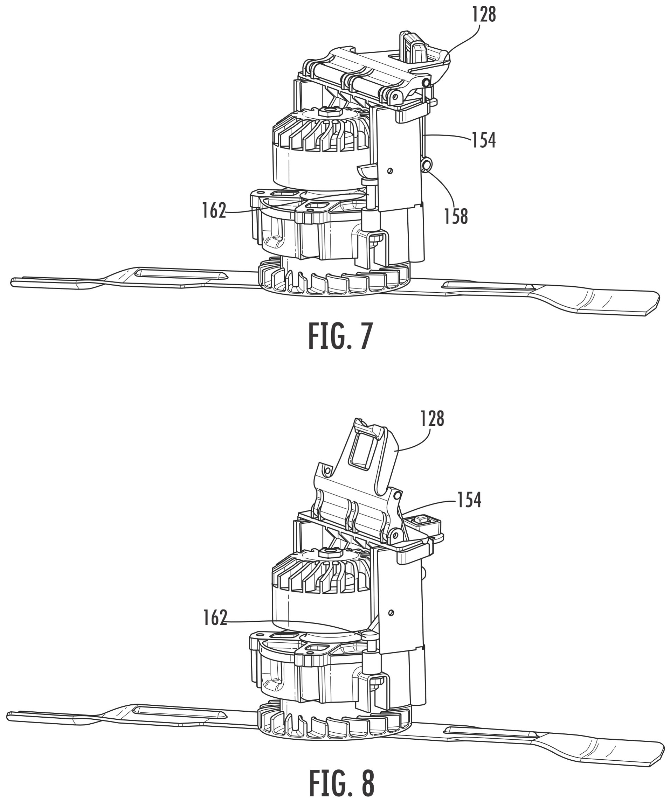

FIGS. 5 and 6 depict enlarged perspective views of the user-actuatable interface 128 in the engaged position. The user-actuatable interface 128 can include a body 138 defining a first attachment point 140 movably coupled to the support structure 134. In an embodiment, the first attachment point 140 permits rotational movement of the body 138 between the engaged and released positions. The body 138 can further define a second attachment point 142 through which the body 138 is coupled to the linkage 130. The second attachment point 142 can permit rotation of the body 138 relative to the linkage 130 to allow actuation thereof through movement of the user-actuatable interface 128. The distance between the first and second attachment points 140, 142 in a direction perpendicular to the pivot axis 136 can be sized such that the linkage 130 undergoes a full stroke when the body 138 is rotated from the engaged position (as shown) to the release position (see, e.g., FIG. 8). In some instances, rotational displacement of the body 138 between the engaged position and the release position can be at least 30°, such as at least 40°, such as at least 50°, such as at least 60°, such as at least 70°, such as at least 80°. In an embodiment, the engaged and release positions can be angularly offset from each other by approximately 90°. In another embodiment, the engaged and release positions can be angularly offset from each other by less than 90°, such as less than 80°, such as less than 70°, such as less than 60°, such as less than 50°, such as less than 40°, such as less than 30°. The engaged position can correspond to a position whereby the blade 114 is fixedly coupled to the quick release system 126. The release position can correspond to a position whereby the blade 114 may be releasable from the quick release system 126. In some implementations, the user-actuatable interface 128 can snap to the engaged and/or release positions upon reaching a critical threshold of rotation. For example, in the last portion of travel (e.g., the last 5%, 10%, etc.) towards the engaged or release position, the body 138 can snap to the end of travel.

The body 138 can form an interlock 144 with a user-selectable component 146 that selectively restricts movement of the user-actuatable interface 128 from the engaged state. For example, the body 138 can include an opening 148 which receives the user-selectable component 146. The user-selectable component 146 can extend fully through the opening 148 such that the user-selectable component 146 can be easily accessed when the cover is removed, exposing the compartment 103 in which the quick release system 126 is at least partially disposed within. The operator can adjust the user-selectable component 146 to permit rotation of the user-actuatable interface 128. For example, the operator can remove the user-selectable component 146 from a receiver 150, e.g., by pulling the user-selectable component 146 in a direction 152 away from the receiver 150. Once removed from the receiver, the user-actuatable interface 128 is clear to rotate to the released position.

In an embodiment, the user-selectable component 146 is a key, such as an on/off key that controls use of the lawnmower 100. The receiver 150 is a key slot into which the key is receivable to power the lawnmower 100. In this regard, the quick release system 126 is only actionable to move when the key is not present. Thus, the operator cannot accidently move the quick release system 126 to the released state while power can be supplied to the motor 118. Instead, the quick release system 126 is only usable when power to the motor 118 is restricted by removal of the key.

Referring again to FIGS. 3 and 4, the batteries 120 can be disposed relative to the user-actuatable interface 128 such that the user-actuatable interface 128 is not capable of being fully displaced to the release position with the batteries 120 present at the lawnmower 100 in the compartment 103 and ready to power the motor 118. Instead, the user-actuatable interface 128 is only movable to the release position when the batteries 120 are removed. In this regard, the operator cannot accidently move the quick release system 126 to the release position while power can be supplied to the motor 118. In some instances, use of the batteries 120 as a physical barrier against movement of the user-actuatable interface 128 can be enough to prevent undesirable detachment of the blade 114, however, in other instances, the batteries 120 and user-selectable component 146 can be used together to prevent movement of the user-actuatable interface 128 to the release position.

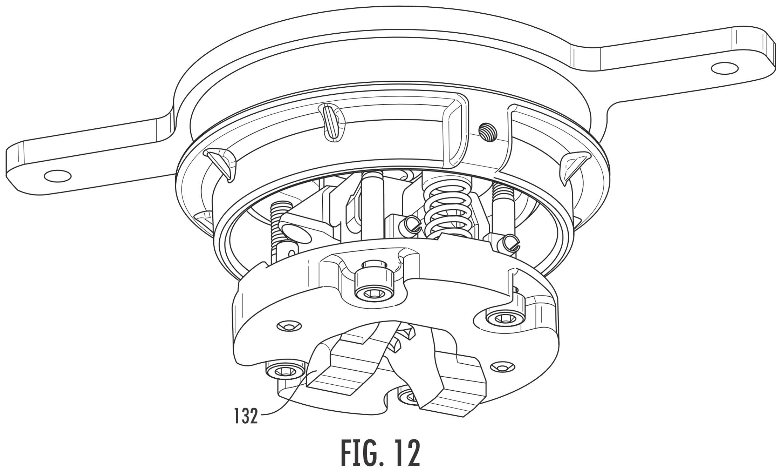

Further aspects of the user-actuatable interface 128, linkage 130, and blade engagement elements 132 will now be described in greater detail with reference to FIGS. 7 to 13. The components may be used as described and/or modified to transmit locking and unlocking force generated by the operator, e.g., at the user-actuatable interface 128, to the blade engagement elements 132.

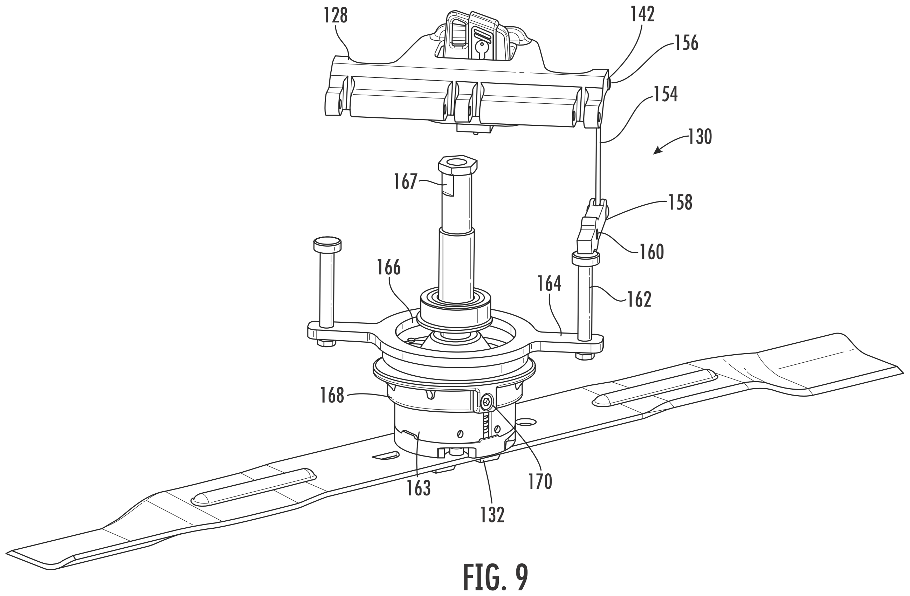

Referring initially to FIG. 9, the linkage 130 can generally transmit force applied to the user-actuatable interface 128 to the blade engagement elements 132. The linkage 130 can include a rod 154 having an engagement 156 that interfaces with the user-actuatable interface 128 at the second attachment point 142. In addition, or alternatively, the linkage 130 can include a cable (such as a tension cable, a Bowden cable of any length, or the like), a pneumatic or hydraulic system, an electrical system, or other mechanism that transmits motion from the user-actuatable interface 128.

The rod 154 may operate in tension or compression. While the following description applies to tension, the components described herein can be modified to operate under compression. The engagement 156 can include a pin that extends into an aperture formed at the second attachment point 142. The pin permits rotation of the user-actuatable interface 128 and transmits forces created by rotation of the user-actuatable interface 128 to the blade engagement elements 132. As the user-actuatable interface 128 moves towards the release position, the engagement 156 pulls (tensions) the rod 154 upward, away from the engagement elements 132. Through its motion, the rod 154 rotatably drives a lever 158 about a pivot point 160, causing the lever 158 to press down onto one or more driving pins 162. The driving pins 162 can translate within a guide, e.g., formed by the body 102 or another structure of the lawnmower 100, and interact with a driving plate 164 to move the driving plate 164 downward. The driving plate 164 can define a central opening 166 through which a motor shaft 167 driven by the motor 118, or a connected fitting, extends through. While only one rod 154 is depicted, it should be understood that a second rod (not illustrated) may extend from the user-actuatable interface 128 to a second driving pin located on an opposite side of the motor shaft 167. The second rod may apply the same or similar force on the second driving pin to balance force applied to the driving plate 164.

As the driving plate 164 moves downward, a driven plate 168 is driven downward. Whereas the driving plate 164 remains relatively stationary while the motor 118 drives the blade 114 to rotate, the driven plate 168 can rotate with the blade 114. Thus, the interface formed between the driving and driven plates 164, 168 can be a sliding interface that permits the driven plate 168 to rotate. In some implementations, a low friction interface can be disposed between and pair the driving and driven plates 164, 168. In other implementations, a small gap can separate the driving and driven plates 164, 168 when the user-actuatable interface 128 is in the engaged state, thus permitting free (unrestricted) rotation of the driven plate 168 without buildup of heat or wear.

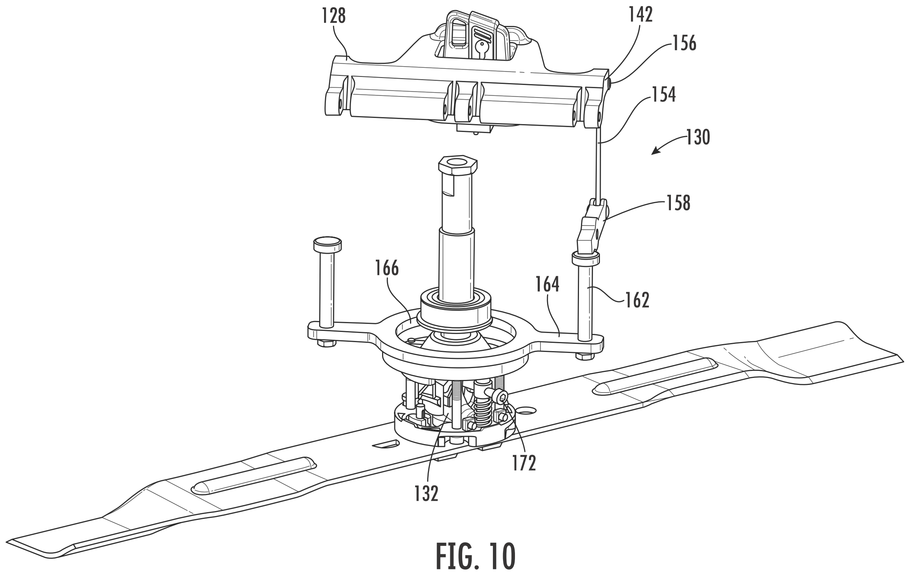

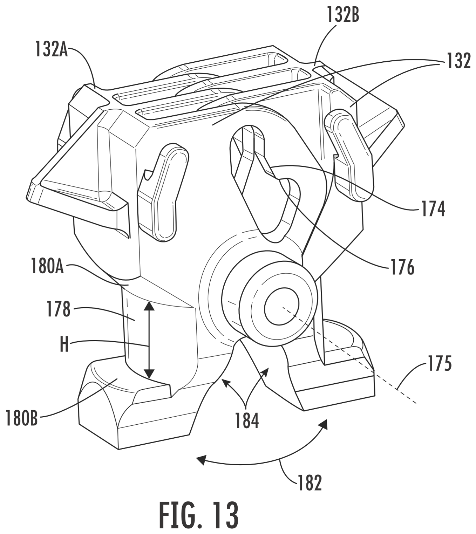

The driven plate 168 includes mounting locations 170 which interface with a lifter 172 (FIG. 10). For example, the mounting locations 170 can include complementary openings extending through the driven plate 168 at opposite sides of the driven plate 168. The lifter 172 can include one or more pins that are retained by the openings such that the lifter 172 is fixed to the driven plate 168. Alternatively, the lifter 172 can be integrally formed with the driven plate 168 or attached thereto by another attachment means. The lifter 172 can be guided by channels in a guide structure 163. The lifter 172 can interact with the blade engagement elements 132 to move the blade engagement elements 132 between the engaged and released states. For example, the lifter 172 can extend through the blade engagement elements 132, such as through slots 174 in the blade engagement elements 132 (FIG. 13). The slots 174 can be curved such that vertical translation of the lifter 172 within the slots 174, as caused when the driven plate 168 is urged by the user-actuatable interface 128, causes the blade engagement elements 132 to rotate about a pivot axis 175. In an embodiment, the slots 174 can include retention features, such as a retention surface 176, which lock with the lifter 172 to selectively maintain the blade engagement elements 132 in a desired state, such as in the released state. In this regard, the blade engagement elements 132 remain in the desired state even when active pressure is not applied to the user-actuatable interface 128 to bias the blade engagement elements 132 to the desired state. The retention surface 176 can include a notch or cutout formed in the slot 174 which catches the lifter 172 and prevents further translation relative to the slot 174.

The blade engagement elements 132 can include a plurality of blade engagement elements, such as a first blade engagement element 132A and a second blade engagement element 132B (FIG. 13) that collectively pivot about pivot axis 175. The blade engagement elements 132A, 132B can share one or more common attributes, such as a common shape, size, or both. The blade engagement elements 132A, 132B can be oriented inversely relatively to one another.

The blade engagement elements 132A, 132B each include a blade receiving area 178. The blade receiving areas 178 can include indented surfaces bounded by upper and lower lips 180A, 180B. The upper and lower lips 180A, 180B are separated by a height H of the blade receiving area 178. The height H can correspond generally to the thickness of the blade 114. Alternatively, or in addition, the height H can also accommodate stack height of the blade 114 and other components (such as the fan 197 and a base of the chassis). An exposed portion of the height H, i.e., a portion of the blade engagement elements 132 that extends through the chassis, may be substantially equal to the thickness of the blade 114. The height H can be tuned to accommodate one blade or two blades, different thickness blades, different types of blades, or the like. As the lifter 172 moves within the slots 174, the blade engagement elements 132A, 132B pivot about pivot axis 175 between the engaged and released states.

The lifter 172 can extend through slots 174 located in each of the blade engagement elements 132A, 132B. The lifter 172 can be driven in a first direction by actuation of the user-actuatable interface 128. More particularly, the lifter 172 can be driven towards the pivot axis 175 by moving the user-actuatable interface 128 from the engaged position to the release position. As a result, the blade engagement elements 132A, 132B are repositioned to the released state. Upon reaching a critical threshold, the lifter 172 can be retained by the retention surfaces 176 of the slots 174 so as to maintain the blade engagement elements 132A, 132B in the released state.

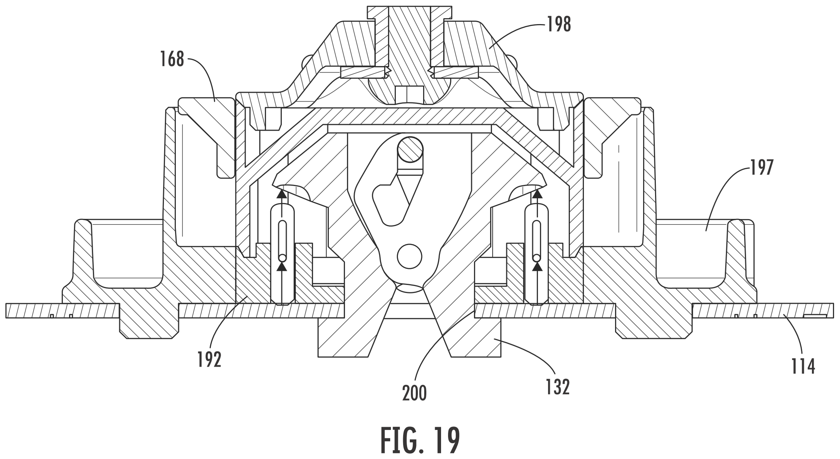

Referring to FIG. 19, the blade engagement elements 132A, 132B can each, or alternatively only one of the blade engagement elements 132A, 132B can, include a bearing surface 177 which forms a cam against which actuator pins 179 can push to reposition the blade engagement elements 132A, 132B from the released state to the engaged state. The actuator pins 179 can be pushed in direction 181 by the blade 114 when the blade 114 is introduced and biased towards the bearing surface 177. As the actuator pins 179 move in the direction 181 in response to displacement of the blade 114, the actuator pins 179 push against (e.g., directly against) the bearing surface(s) 177 of the blade engagement elements 132A, 132B. The blade engagement elements 132A, 132B are driven away from the released state towards the engaged state. Once the blade engagement elements 132A, 132B rotate a sufficient amount such that the lifter 172 is clear of the retention surfaces 176, the blade engagement elements 132A, 132B can snap to the engaged positions under spring force, moving apart in the direction 182 (FIG. 13). In some instances, the user-actuatable interface 128 can automatically return to the engaged position based on this motion. The blade 114 can thus self-lock with the blade engagement element 132, i.e., without further user involvement, upon translating the blade 114 far enough onto the blade engagement element 132. In other instances, the user-actuatable interface 128 is manually moved to the engaged position to lock the blade engagement elements 132A, 132B in the engaged state.

Conversely, as the user-actuatable interface 128 is moved to the release position (e.g., FIG. 8), the blade engagement elements 132A, 132B move together in a direction opposite direction 182. In some instances, inner surfaces 184 of the blade engagement elements 132A, 132B can contact one another when the user-actuatable interface 128 is in the release position. A distance between the blade receiving areas 178 (and the lower lips 180B) is minimal when the blade engagement elements 132A, 132B are in the released state, thereby allowing the blade 114 to be translated onto the blade engagement element 132.

In some instances, one or more anti-rotation features 186 (FIG. 3) extend through auxiliary openings in the blade 114 to rotationally lock the blade 114 relative to the motor 118. The anti-rotation feature(s) 186 can also, or alternatively, form a frangible portion that is designed to fail before failure of another component of the quick release system 126. The anti-rotation feature(s) 186 can shear in response to excessive force on the blade 114, such as when the blade 114 impacts against a hard object. Once sheared, the anti-rotation feature(s) 186 do not provide significant anti-rotational support, thereby allowing the blade 114 to move in rotation about the rotational axis R.

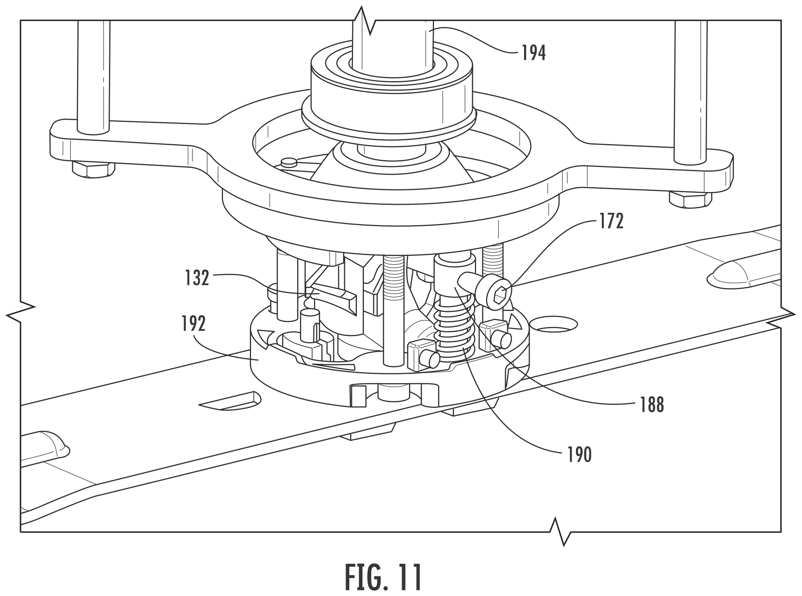

In an embodiment, the lifters 172 can be biased towards the engaged state. For example, as depicted in FIG. 11, the lifters 172 can extend through mounts 188 which interface with springs 190. In an embodiment, the mounts 188 include spring inserts which seat within the spring 190 to mitigate the spring 190 from separating from the mount 188. Other anti-separation features may be implemented. The springs 190 further rest against a support plate 192 which is fixedly coupled to the output shaft 194 of the motor 118 to bias the lifters 172 in the upward (locked) direction. Thus, the spring 190 compresses when the user-actuatable interface 128 is moved to the release position. The spring force on the lifters 172 creates upward force on the blade engagement element 132. This force can be counteracted by the retention surface 176 to maintain the blade engagement element 132 in the released state against the pressure generated by the spring 190.

The support plate 192 is fixed relative to the output shaft 194 by columns 196, such as bolts, anchored with a crown plate 198. The crown plate 198 can be directly coupled to the output shaft 194 such that movement of the output shaft 194 as caused by rotation of the motor 118 drives the crown plate 198, the columns 196, and the support plate 192. Additionally, the blade engagement element 132, springs 190, and other associated hardware can rotate under force generated by the motor 118.

In some instances, the quick release system 126 can implement a fan 197, such as integrated into one or more of the structures previously described, in order to provide a cooling effect, enhanced swirl flow paths within the cutting environment, or both.

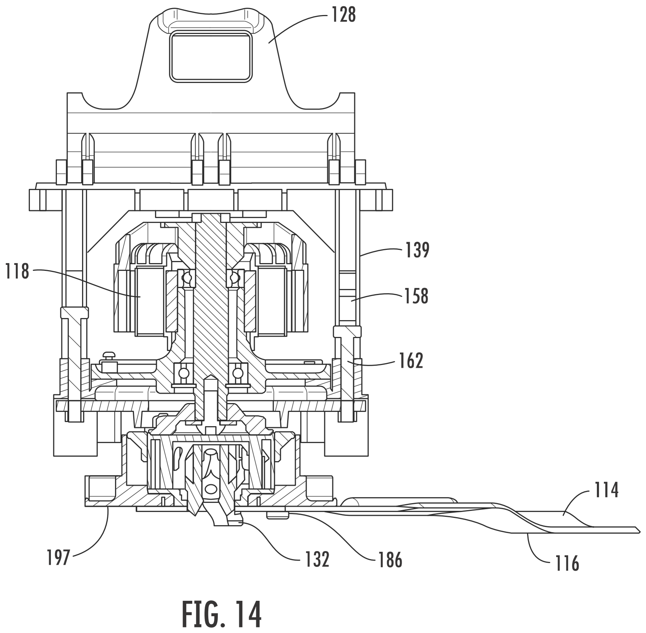

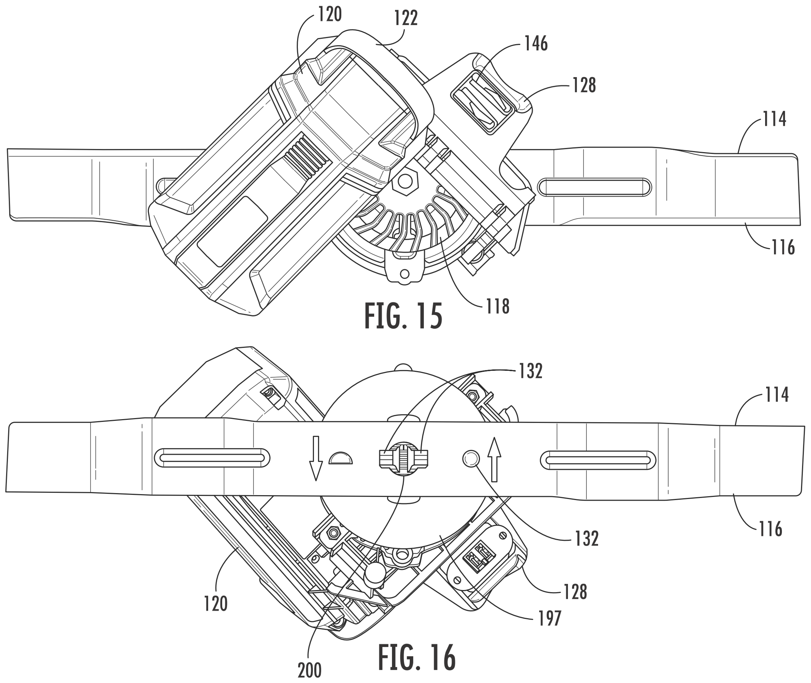

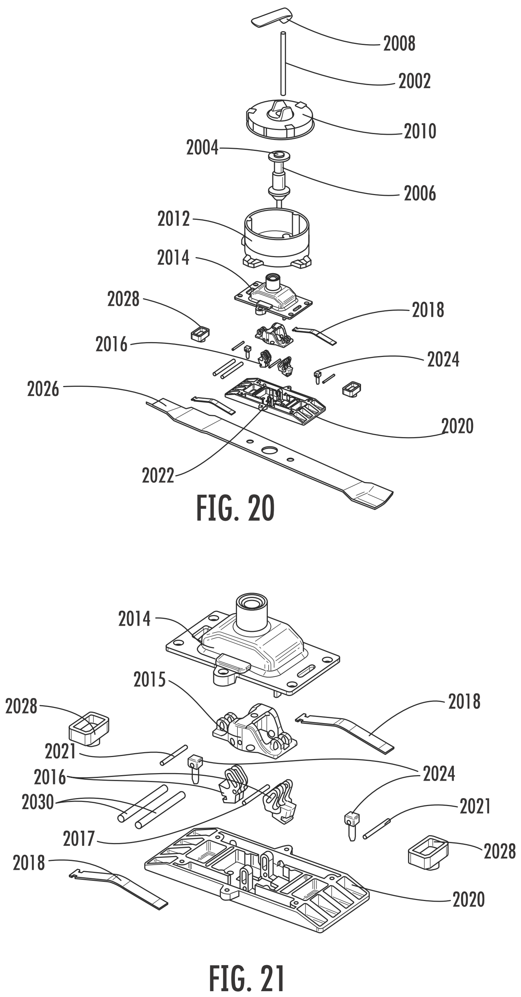

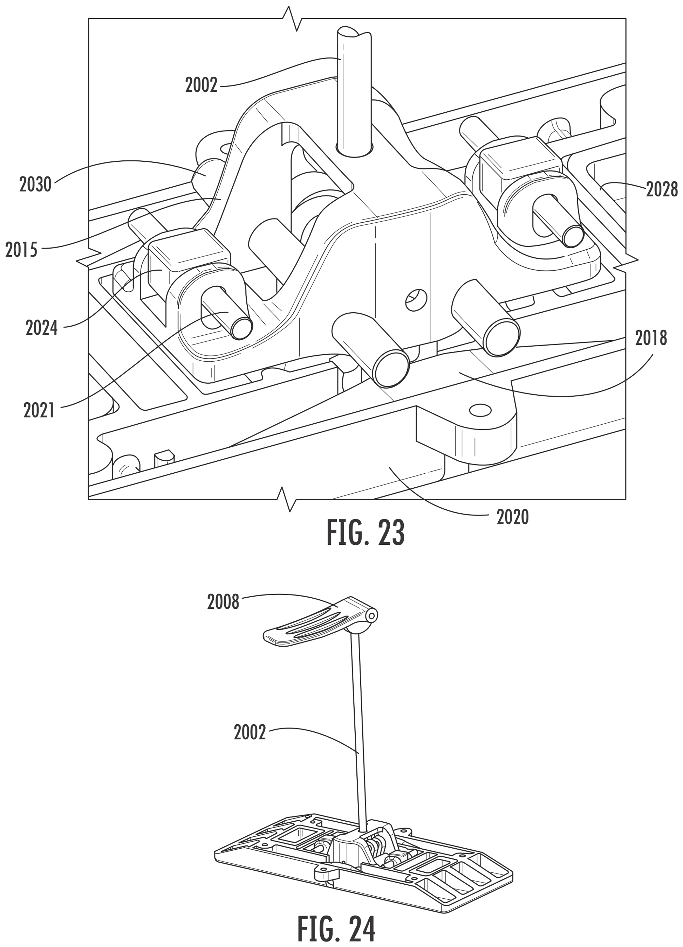

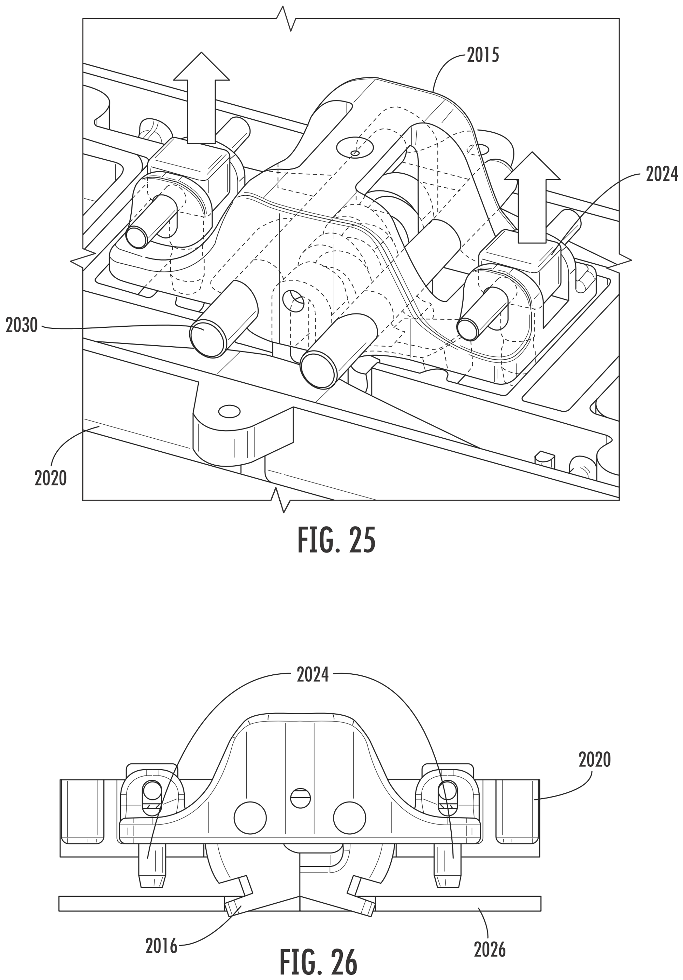

FIGS. 20 to 26 depict a quick release system 2000 in accordance with another embodiment. The quick release system 2000 may include any one or more of the features or components as described above with respect to FIGS. 1 to 19. The quick release system 2000 can include a push rod 2002 instead of the rod 154 which is pulled by the user-actuatable interface of the embodiment depicted in FIGS. 3 to 19. The push rod 2002 extends centrally through an axial opening 2004 disposed in a hollow drive shaft 2006. The push rod 2002 is driven by movement of a release lever 2008. The release lever 2008 can rotate about a horizontal axis. The push rod 2002 extends through a motor cover 2010 and a motor housing 2012. The push rod 2002 interacts with a clamp-to-shaft adapter 2014. The clamp-to-shaft adapter 2014 can at least partially house a clamp chassis 2015 and one or more blade engagement elements 2016. Leaf springs 2018 can bias the clamp chassis 2015 to engaged and/or released states. The blade engagement elements 2016 are coupled to the clamp chassis 2015 through a pin 2017. The pin 2017 can be fixed (or rotatable) relative to the clamp chassis 2015 and ride within a channel of the blade engagement elements 2016 to reorient the blade engagement elements 2016 between the engaged and released states.

A blade mount 2020 can be coupled to the clamp-to-shaft adapter 2014. The blade mount 2020 can include an opening 2022 through which the blade engagement elements 2016 can extend. Actuator pins 2024 can further extend through the blade mount 2020. When the quick release system 1000 is released, the actuator pins 2024 can extend through the blade 2026 to push the blade 2026 away from the blade mount 2020 to assist in disconnection therebetween. Moreover, the actuator pins 2024 can move the quick release system 2000 to move the blade engagement elements 2016 to the engaged state upon introduction of the blade 2026 thereagainst. The actuator pins 2024 can be coupled to the blade mount 2020 via a link pin 2021. A shear limit key 2028 can extend through the blade mount 2020 and rotationally pin the blade 2026 to the blade mount 2020.

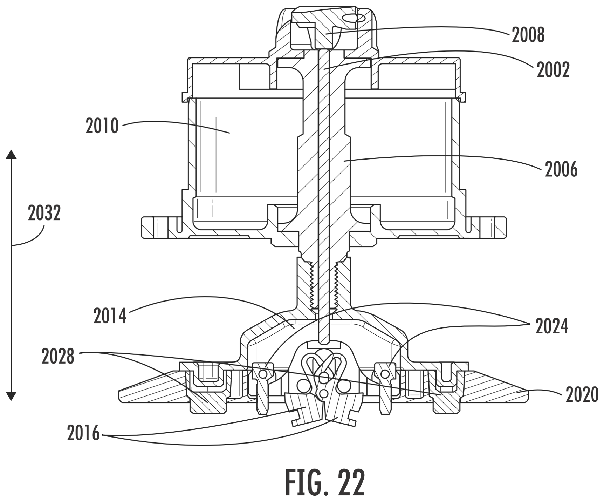

The blade engagement elements 2016 are movably (e.g., rotatably) coupled to the blade mount 2020, or another structure, through rocker pins 2030. The push rod 2002 is biased to the raised state in an upward direction along axis 2032 (FIG. 22). The release lever 2008 includes a cammed surface that interacts with an upper edge of the push rod 2002 such that moving the release lever 2008 to the engaged position causes the push rod 2002 to travel in a downward direction along axis 2032. Downward travel of the push rod 2002 can cause the clamp chassis 2015 to displace in the downward direction. The actuator pins 2024 can move through the blade mount 2020 and push against the blade 2026 to discharge the blade 2026 from the blade mount 2020. Simultaneously, the rocker pins 2030 can be displaced downward by downward displacement of the chassis 2015. The shape of channels or openings within the blade engagement elements 2016 can cause the blade engagement elements 2016 to move between the engaged and released states as the rocker pins 2030 are driven downward.

With the blade engagement elements 2016 in the released state, the blade is removed and interchanged with one or more additional blades or even the original blade. The operator can align the opening of the new/replacement blade against the blade engagement elements 2016 and move the release lever 2008, e.g., by rotation about a pivot axis, to move the blade engagement elements 2016 into the engaged state. Where the shear limit keys 2028 are not properly aligned with complementary receivers of the blade 2026, the blade 2026 may be rotated until the shear limit keys 2028 are rotationally aligned with the complementary receivers, at which point, force from the blade engagement elements 2016 (e.g., generated by the leaf spring 2018 restoring the blade engagement elements to the engaged state) can draw the blade 2026 to the blade mount 2020. A tactile and/or audible indication may accompany positive engagement between the shear limit keys and the complementary receivers of the blade 2026.

While embodiments described herein and depicted in the figures are directed to walk-behind and push lawnmowers, the quick release system described herein can be used on other types of lawnmowers, such as riding lawnmowers, standing lawnmowers, autonomous lawnmowers, or the like to secure a cutting implement, such as a blade, to a motor, such as an output shaft of an electric motor.

Further aspects of the invention are provided by one or more of the following embodiments:

A lawnmower comprising: a motor; a blade having a sharpened edge; and a quick release system configured to releasably couple the blade to the motor, the quick release system comprising: a user-actuatable interface movable between an engaged position and a release position; a blade engagement element; and a linkage coupled to the user-actuatable interface and configured to drive the blade engagement element between an engaged state and a release state in response to movement of the user-actuatable interface between the engaged and release positions.

The lawnmower of any one or more of the embodiments, further comprising a battery compartment configured to receive a battery, wherein the user-actuatable interface is positioned relative to the lawnmower such that movement from the engaged position to the release position is restricted with the battery present in the battery compartment, and wherein the restricted movement prevents the blade engagement element from reaching the release state.

The lawnmower of any one or more of the embodiments, wherein the user-actuatable interface is further restricted against movement from the engaged position to the release position by a key received in a key slot of the lawnmower.

The lawnmower of any one or more of the embodiments, wherein the battery is received in a compartment, and wherein the user-actuatable interface is accessible in the compartment.

The lawnmower of any one or more of the embodiments, wherein the user-actuatable interface is restricted against movement from the engaged position to the release position by a key received in a key slot of the lawnmower.

The lawnmower of any one or more of the embodiments, wherein the linkage drives a driving plate in a linear direction in response to the user-actuatable interface moving from the engaged position to the release position, wherein the driving plate drives a driven plate in the linear direction, and wherein the driven plate is slidably interfaced with the driving plate such that the driven plate rotates about a rotation axis oriented parallel to the linear direction when driven by the motor.

The lawnmower of any one or more of the embodiments, wherein the blade engagement element remains in the release state without application of active applied force on the user-actuatable interface.

The lawnmower of any one or more of the embodiments, wherein the blade engagement element is spring biased to the engaged state.

The lawnmower of any one or more of the embodiments, wherein the motor is incapable of rotatably driving the blade when the blade engagement element is in the release state regardless of a position of a throttle of the lawnmower.

The lawnmower of any one or more of the embodiments, wherein the blade has a moment of inertia of at least 0.005 kg·m².

The lawnmower of any one or more of the embodiments, wherein the motor rotatably drives the blade at a maximum speed of less than 4,000 revolutions per minute (RPM).

A method of removing a blade from a lawnmower, the method comprising: removing a battery or user-selectable component from a path of a user-actuatable interface to permit a full range of movement of the user-actuatable interface; and after permitting the full range of movement, moving the user-actuatable interface from an engaged position to a release position, wherein moving the user-actuatable interface causes a lifter to move a blade engagement element from an engaged state to a release state, and wherein the blade is removable with the blade engagement element in the release state.

The method of any one or more of the embodiments, wherein the blade engagement element is spring biased to the engaged state.

The method of any one or more of the embodiments, wherein the user-actuatable interface is movable via rotation about a first rotation axis, wherein the blade engagement element is movable via rotation about a second rotation axis, and wherein the first and second rotation axis are oriented parallel with one another.

The method of any one or more of the embodiments, wherein the battery or user-selectable component is disposed on a first side of the motor, and wherein the blade engagement element is disposed on a second side of the motor opposite the first side.

The method of any one or more of the embodiments, further comprising attaching a new blade to the lawnmower, wherein attaching the new blade comprises: aligning the new blade with the blade engagement element while the blade engagement element remains in the release state; after the new blade is aligned with the blade engagement element, moving the new blade towards one or more actuator pins extending towards the new blade, wherein moving the new blade towards the one or more actuator pins causes the blade engagement element to move to the engaged state.

The method of any one or more of the embodiments, wherein the blade is releasable from the lawnmower without the use of tools.

A lawnmower comprising: a throttle; a motor; a battery removably disposed in a battery compartment and electrically coupled to the motor to energize the motor in response to user input received at the throttle; a blade with a sharpened edge; and a quick release system releasably coupling the blade to the motor, the quick release system comprising: a user-actuatable interface movable along a path between an engaged position and a release position, wherein the path is blocked by the battery when the battery is disposed in the battery compartment or blocked by a user-selectable component when the user-selectable component is coupled with the lawnmower; a blade engagement element; and a linkage coupled to the user-actuatable interface and configured to drive the blade engagement element between an engaged state and a release state in response to movement of the user-actuatable interface between the engaged and release positions.

The lawnmower of any one or more of the embodiments, wherein the blade engagement element is spring biased to the engaged state.

The lawnmower of any one or more of the embodiments, wherein the battery or user-selectable component is disposed on a first side of the motor, and wherein the blade engagement element is disposed on a second side of the motor opposite the first side.

A lawnmower comprising: a wheel supporting a cutting deck; a motor; a blade having a sharpened edge, wherein the blade is disposed at least partially within the cutting deck; and a quick release system configured to releasably couple the blade to the motor, the quick release system comprising: a user-actuatable interface movable between an engaged position and a release position; a blade engagement element; and a linkage coupled to the user-actuatable interface and configured to drive the blade engagement element between an engaged state and a release state in response to movement of the user-actuatable interface between the engaged and release positions.

The lawnmower of the previous embodiment, further comprising a battery compartment configured to receive a battery, wherein the user-actuatable interface is positioned relative to the lawnmower such that movement from the engaged position to the release position is restricted with the battery present in the battery compartment, and wherein the restricted movement prevents the blade engagement element from reaching the release state.

The lawnmower of any one of the previous embodiments, wherein the user-actuatable interface is further restricted against movement from the engaged position to the release position by a key received in a key slot of the lawnmower.

The lawnmower of claim 2, wherein the battery is received in a compartment, and wherein the user-actuatable interface is accessible in the compartment.

The lawnmower of any one of the previous embodiments, wherein the user-actuatable interface is restricted against movement from the engaged position to the release position by a key received in a key slot of the lawnmower.

The lawnmower of any one of the previous embodiments, wherein the linkage drives a driving plate in a linear direction in response to the user-actuatable interface moving from the engaged position to the release position, wherein the driving plate drives a driven plate in the linear direction, and wherein the driven plate is slidably interfaced with the driving plate such that the driven plate rotates about a rotation axis oriented parallel to the linear direction when driven by the motor.

The lawnmower of any one of the previous embodiments, wherein the blade engagement element remains in the release state without application of active applied force on the user-actuatable interface.

The lawnmower of any one of the previous embodiments, wherein the blade engagement element is spring biased to the engaged state.

The lawnmower of any one of the previous embodiments, wherein the motor is incapable of rotatably driving the blade when the blade engagement element is in the release state regardless of a position of a throttle of the lawnmower.

The lawnmower of any one of the previous embodiments, wherein the blade has a moment of inertia of at least 0.005 kg·m².

The lawnmower of any one of the previous embodiments, wherein the motor rotatably drives the blade at a maximum speed of less than 4,000 revolutions per minute (RPM).

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A lawnmower comprising:
a motive device;
a blade having a sharpened edge; and
a quick release mechanism configured to releasably couple the blade to the motive
device, the quick release mechanism comprising:
a user-actuatable interface movable between an engaged position and a release position;
a blade engagement element; and
a linkage coupled to the user-actuatable interface and configured to drive the blade engagement element between an engaged state and a release state in response to movement of the user-actuatable interface between the engaged and release positions.

2. The lawnmower of claim 1, further comprising a battery compartment configured to receive a battery, wherein the user-actuatable interface is positioned such that movement from the engaged position to the release position is restricted with the battery present in the battery compartment, and wherein restricted movement prevents the blade engagement element from reaching the release state.

3. The lawnmower of any one of claims 1 or 2, wherein the user-actuatable interface is restricted against movement from the engaged position to the release position by a key received in a key slot of the lawnmower.

4. The lawnmower of any one of claims 1 to 3, wherein the battery is received in a compartment, and wherein the user-actuatable interface is accessible in the compartment.

5. The lawnmower of any one of claims 1 to 4, wherein the linkage drives a driving plate in a linear direction in response to the user-actuatable interface moving from the engaged position to the release position, wherein the driving plate drives a driven plate in the linear direction, and wherein the driven plate is slidably interfaced with the driving plate such that the driven plate rotates about a rotation axis oriented parallel to the linear direction when driven by the motive device.

6. The lawnmower of any one of claims 1 to 5, wherein the blade engagement element remains in the release state without application of active applied force on the user-actuatable interface.

7. The lawnmower of any one of claims 1 to 6, wherein the motive device is incapable of rotatably driving the blade when the blade engagement element is in the release state regardless of a position of a throttle of the lawnmower.

8. The lawnmower of any one of claims 1 to 7, wherein the blade has a moment of inertia of at least 0.005 kg·m².

9. The lawnmower of any one of claims 1 to 8, wherein the motive device rotatably drives the blade at a maximum speed of less than 4,000 revolutions per minute (RPM).

10. A method of removing a blade from a lawnmower, the method comprising:
removing a battery or user-selectable component from a path of a user-actuatable interface to permit a full range of movement of the user-actuatable interface; and
after permitting the full range of movement, moving the user-actuatable interface from an engaged position to a release position,
wherein moving the user-actuatable interface causes a lifter to move a blade engagement element from an engaged state to a release state, and wherein the blade is removable with the blade engagement element in the release state.

11. The method of claim 10, wherein the blade engagement element is spring biased to the engaged state.

12. The method of claim 10 or 11, wherein the user-actuatable interface is movable via rotation about a first rotation axis, wherein the blade engagement element is movable via rotation about a second rotation axis, and wherein the first and second rotation axis are oriented parallel with one another.

13. The method of any one of claims 10, 11, or 12, wherein the battery or user-selectable component is disposed on a first side of a motor, and wherein the blade engagement element is disposed on a second side of the motor opposite the first side.

14. The method of any one of claims 10 to 13, further comprising attaching a new blade to the lawnmower, wherein attaching the new blade comprises:
aligning the new blade with the blade engagement element while the blade engagement element remains in the release state; and
after the new blade is aligned with the blade engagement element, moving the new blade towards one or more actuator pins extending towards the new blade,
wherein moving the new blade towards the one or more actuator pins causes the blade engagement element to move to the engaged state.

15. The method of any one of claims 10 to 14, wherein the blade is releasable from the lawnmower without the use of tools.
